# EUROPÄISCHE PATENTSCHRIFT

(11) **EP 0 518 254 B1**
(45) Veröffentlichungstag und Bekanntmachung des Hinweises auf die Patenterteilung: **12.02.1997**
(21) Anmeldenummer: 92109659.0
(22) Anmeldetag: 09.06.1992
(51) Int. Cl.: F16L 55/165

(54) **Verfahren zur Auskleidung eines tragenden Aussenrohrs**
Process for lining an outer supporting pipe
Procédé de revêtement d'un tuyau exterieur porteur

(30) Priorität: 10.06.1991 DE 4119125
(43) Veröffentlichungstag der Anmeldung: 16.12.1992
(73) Patentinhaber: Steuler-Industriewerke GmbH, D-56203 Höhr-Grenzhausen (DE)
(72) Erfinder: Rohringer, Ernst, W-5411 Hilgert (DE)
(74) Vertreter: VOSSIUS & PARTNER

(56) Entgegenhaltungen:
- DE-A- 2 212 900
- DE-A- 2 609 366
- DE-A- 2 905 614
- DE-C- 816 464
- DE-C- 920 884
- DE-U- 1 723 793
- DE-U- 8 800 949
- FR-A- 797 835
- FR-A- 1 128 038
- GB-A- 1 227 516
- US-A- 2 475 635
- US-A- 2 693 026
- US-A- 3 552 779

## Beschreibung

Die Erfindung betrifft ein Verfahren zum Auskleiden eines tragenden Außenrohrs, das insbesondere für den Transport von grundwassergefährdenden Flüssigkeiten eingesetzt wird.

Erdverlegte Rohre und Kanäle zum Transport von wassergefährdenden Flüssigkeiten sind im Falle von Undichtigkeiten Ursache von Grundwasserverunreinigung.

Um dieses zu verhindern, insbesondere in Wasserschutzgebieten oder beim Transport von stark wassergefährenden Flüssigkeiten, werden in solchen Fällen Rohre oder Kanäle in Doppelmantelausführung mit dazwischenliegendem kontrolliertem Leckanzeigespalt vorgeschrieben.

Es ist bekannt, z.B. in begehbaren Betonkanälen, welche für sich dicht sein und dem Erddruck standhalten müssen, einen zweiten Rohrstrang einzuziehen. Dieser wird auf den ihn umgebenden Betonkanal mittels Distanzrippen abgestützt, er muß im übrigen jedoch selbsttragend, also ohne äußere Hilfe auch im gefüllten Zustand formstabil sein, was einen entsprechenden Aufwand bedeutet. Zwischen den beiden ansonsten voneinander unabhängigen Leitungssystemen ergeben sich Dehnungsunterschiede sowohl in radialer als auch in axialer Richtung. Dies führt bei Rohranschlüssen zu konstruktiven Schwierigkeiten.

Die DE-GM-88 00 949 offenbart ein Koaxialrohr mit einem definierten Abstand des Außenrohrs zum Innenrohr. Der Abstand wird durch Bänder mit noppenartigen Erhöhungen, die sowohl in Umfangsrichtung als auch in Längsrichtung auf der Oberfläche des Innenrohres angeordnet sind, eingestellt. Bei der Montage des Koaxialrohrs wird das Außenrohr locker über das Innenrohr geschoben. Eine kraftschlüssige Verbindung zwischen dem Innen- und dem Außenrohr ist nicht vorgesehen.

Außerdem ist bekannt, Polyethylenrohre im nicht begehbaren Bereich unter Vorspannung z.B. in einen alten Kanal einzubauen. Es handelt sich hierbei um ein sogenanntes "Rolldown"-Verfahren, bei dem ein Polyethylenrohr in einer Rollenvorrichtung zusammengedrückt wird, sich später nach dem Einziehen in den Kanal von selbst wieder auf den früheren Durchmesser vergrößert und sich dadurch an den bestehenden alten Kanal anpreßt. Ein Leckspalt oder Distanzhalter sind dabei nicht vorgesehen.

Die US-A-2 693 026 beschreibt ein Verfahren zum Herstellen von konzentrischen Metallrohren mit radialen Rippen. Dabei wird ein Innenrohr mittels eines Werkzeuges durch plastische Verformung aufgeweitet, um die radialen Rippen unter Druck mit dem Innen- und Außenrohr kraftschlüssig zu verbinden und danach zu verschweißen. Da durch die Verbindung des Innenrohrs mit den Rippen eine Rückdehnung verhindert wird, ist das Innenrohr unter Zugvorspannung mit dem Außenrohr verbunden.

Demgegenüber liegt der Erfindung die Aufgabe zugrunde, ein kostengünstiges Verfahren zur Auskleidung eines Außenrohrs mit einem Innenrohr zur Verfügung zu stellen, das einen in Umfangs- und Längsrichtung durchgängigen Leckspalt erreicht und Dehnungsunterschiede zwischen dem Außenrohr und dem Innenrohr abfängt.

Diese Aufgabe wird mit den Merkmalen von Patentanspruch 1 gelöst.

Bei der Lösung geht die Erfindung von dem Grundgedanken aus, das Innenrohr mit dem Außenrohr über mehrere sowohl über den Umfang als auch in Längsrichtung des Innenrohrs verteilte Distanzhalter kraftschlüssig zu verbinden.

Die Vorteile der Erfindung bestehen darin, daß die beiden Rohre keine Relativbewegung zueinander ausführen können und es zu keinem Stau von Leckflüssigkeit kommt. Außerdem lassen sich nicht selbsttragende Innenrohre verwenden, wodurch Material eingespart und somit eine kostengünstigere Herstellung erreicht wird.

Im folgenden wird ein Ausführungsbeispiel der Erfindung anhand der Zeichnungen näher erläutert. Es zeigen:
- Fig. 1: einen Längsschnitt durch eine erfindungsgemäße Ausführungsform entlang der Linie I-I in Fig. 2,
- Fig. 2: einen Querschnitt der Ausführungsform entlang der Linie II-II in Fig. 1,
- Fig. 3: einen Detailquerschnitt durch die Wandung des Doppelmantelrohres entlang der Linie III-III in Fig. 1, und
- Fig. 4: einen Detailquerschnitt ähnlich Fig. 3, jedoch mit anderen Distanzhaltern.

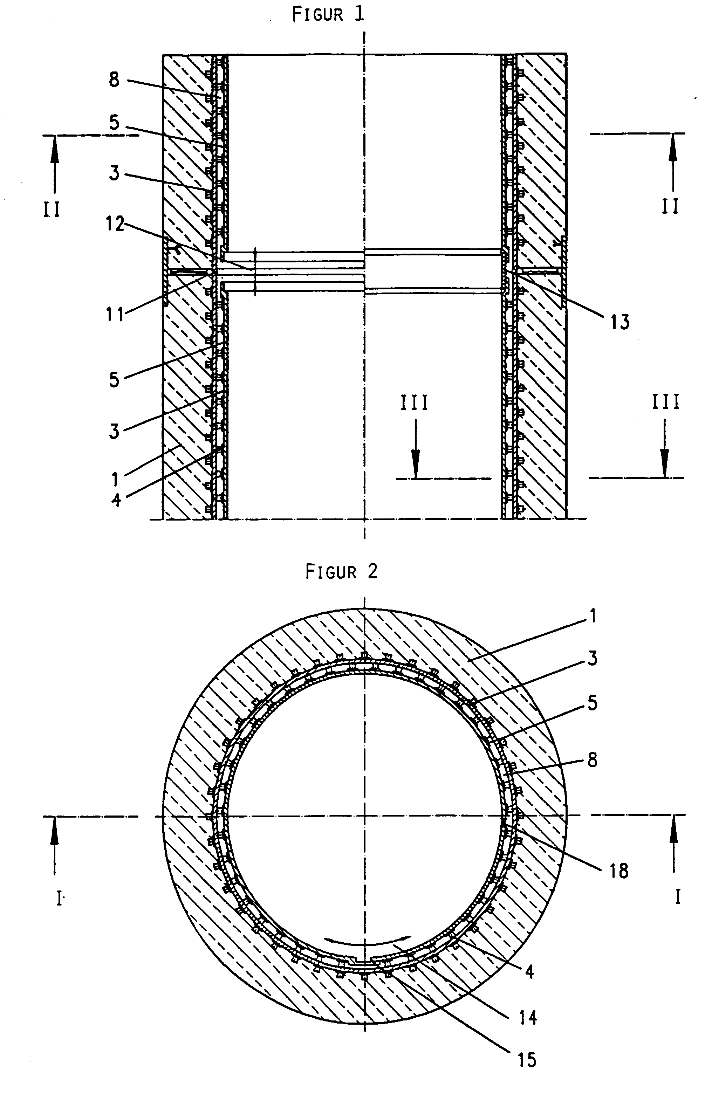

Gemäß den Figuren 1 und 2 besteht das erfindungsgemäße Doppelmantelrohr z.B. aus einem statisch tragenden Betonrohr 1, das in bekannter Weise z.B mit einer durch Noppen 2 mechanisch verankerten inneren Thermoplastauskleidung 3 versehen ist. An die Stelle eines Betonrohres könnte auch ein Stahlrohr, an die Stelle einer Thermoplastauskleidung auch eine andere Auskleidung, z.B. eine Kunstharzbeschichtung, treten.

Die Auskleidung 3, in den meisten Fällen aus Polyethylen PE-HD, wird an den Rohrstoßstellen verschweißt oder, bei einem anderen Auskleidungsmaterial, entsprechend abgedichtet und auf Dichtigkeit geprüft. Aus der Verbindung des Betonrohres 1 und der Auskleidung 3 entsteht so in bekannter Weise ein dichtes und chemisch beständiges Rohr, welches im Kanalbau eingesetzt wird. Erfindungsgemäß wird in dieses Außenrohr 1, 3 ein Innenrohr 5 eingebracht, welches beispielsweise aus Thermoplastmaterial besteht und sich über Distanzhalter 4 auf der Auskleidung 3 des Außenrohres abstützt. Durch eine geeignete Auswahl der Anzahl der Distanzhalter 4 werden die mechanischen Belastungen des Innenrohrs 5 über die Auskleidung 3 auf den statisch tragenden Betonaußenmantel 1 übertragen, so daß die Wandung 5 des Innenrohrs nur den zwischen den Distanzhaltern 4 wirkenden inneren Flüssigkeitsdruck aufzunehmen hat. Das Innenrohr 5 muß also statisch nicht selbsttragend ausgeführt sein. Durch die Distanzierung des Innenrohrs 5 von der Innenfläche des Außenrohrs 7 entsteht ein kontrollierbarer Leckanzeigespalt 8 mit einer Ringspaltbreite, die der Höhe der Distanzhalter 4 entspricht.

Die Distanzhalter 4 sind als Einzelelemente z.B. Noppen ausgebildet, um einen möglichst ungehinderten Durchtritt eventueller Leckflüssigkeit in allen Richtungen bis zu einem Sammelpunkt sicherzustellen.

Erfindungsgemäß wird das Innenrohr 5 in das tragende Außenrohr 1, 3 unter Vorspannung eingebracht, um einen Kraftschluß unter allen Betriebsbedingungen sicherzustellen.

Um die Auskleidung 3 an den Rohrstößen abdichten zu können, wird im Innenrohr an dieser Stelle ein Ringspalt 12 offengelassen. Hierdurch wird Zugang zu der Verbindungsfuge 11 geschaffen, um diese abdichten zu können. Anschließend wird der Ringspalt 12 im Innenrohr 5 durch Einschweißen oder Einklemmen einer Ringleiste 13 geschlossen und damit ein durchgehend dichtes Innenrohr 5 hergestellt.

Ist eine Auskleidung 3 des ansonsten als dichter Außenmantel dienenden Außenrohres 1 nicht vorgesehen, kann die Distanzhalterverankerung des Innenrohrs 5 auch in einem lediglich zu diesem Zweck eingebrachten Mörtel erfolgen.

Das Innenrohr 5 ist mit einer längsgeteilten Fuge 15 versehen (vgl. Fig. 2).

Die Vorspannung wird durch eine unter Zwang erfolgende Relativbewegung 14 in der Fuge 15 erzeugt oder dadurch, daß das in gekühltem Zustand eingebaute Rohr 5 während der Rückerwärmung an einer Dehnung in der Fuge 15 gehindert wird.

Der innere Flüssigkeitsdruck des nicht selbsttragenden Innenrohres 5 wird durch die Distanzhalter 4 auf den Außenmantel 1 abgetragen; das Innenrohr 5 ist damit gegen Innendruck stabil. Im Falle einer Undichtigkeit des Innenrohres 5 kann der Leckanzeigespalt 8 vollaufen. Bei einer Druckentlastung des Innenrohrs 5 ohne gleichzeitige Druckentlastung des Leckspaltes 8 würde ein Außendruck auf das Innenrohr 5 wirken, gegen den dieses je nach konstruktiver Ausführung, nicht stabil sein muß. Um auch in diesem besonderen Störfall Schäden zu vermeiden, können erfindungsgemäß in das Innenrohr einseitig wirkende Durchlaßsicherungen (Überdruckventile) 18 eingebaut werden. Diese erlauben bei einem im Leckanzeigespalt 8 gegenüber dem Rohrinneren vorhandenen Überdruck einen Durchtritt des Leckspaltinhalts in das Rohrinnere und damit die Herstellung eines vorgegebenen, zulässigen Gleichgewichtszustands.

Eine Möglichkeit, die Vorspannung zu erzeugen, besteht darin, das Innenrohr 5 als in der Längsrichtung geteiltes Rohr (Fig. 2, Fuge 15) in gekühltem Zustand einzubringen, so daß es sich bei der Rückerwärmung durch temperaturbedingte Dehnung an den Außenmantel 1, 3 anpreßt und diese Vorspannung auch bei späterer Betriebsbelastung auf Dauer aufrechterhält. Das überwiegend verwendete Rohrmaterial Polyethylen PE-HD kann zu diesem Zweck bis unter -50°C gekühlt werden, was in Verbindung mit der gegenüber Beton um das ca. 15-fache größeren Wärmedehnung zu hohen, berechenbaren Vorspannungswerten führt.

Eine andere Möglichkeit besteht in einem mechanischen Aufspreizen des geteilten Innenrohres 5 und Verschweißen des Rohres in diesem vorgespannten Zustand.

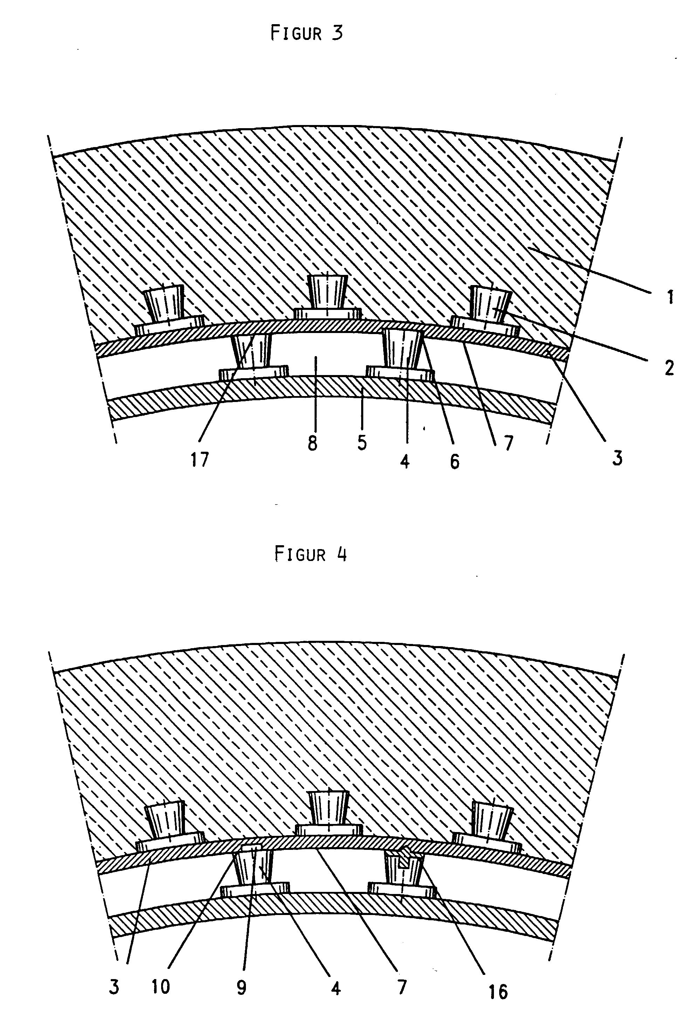

Gemäß Fig. 3 wird die Vorspannung des Innenrohres 5 über die vorzugsweise mit dem Innenrohr verbundenen Distanzhalter 4 und deren Kontaktfläche 17 auf das Außenrohr 1, 3 übertragen. Die Kontaktfläche 17 muß so gestaltet sein, daß an dieser Fläche als Ergänzung zu der radial wirkenden Vorspannung eine kraftschlüssige Sicherung gegen seitliches Verschieben erfolgt. Um den Kraftschluß zu bewirken, muß eine entsprechende Anzahl an Noppenkontaktflächen 17 vorhanden sein, die mehrere 100 pro m² betragen kann.

Erfindungsgemäß wird der Kraftschluß bei einer im Außenrohr vorhandenen Thermoplastauskleidung 3 insbesondere dann erreicht, wenn die Thermoplastauskleidung 3 unmittelbar bei der Montage des Innenrohrs 5 durch Erhitzen plastifiziert wird, so daß sich die Distanzhalter des Innenrohres 5 beim Entstehen der Vorspannung in das Auskleidungsmaterial an der Kontaktfläche eindrücken (Vertiefung 6) und so gegen seitliches Verschieben verankert werden.

Tritt an die Stelle einer Thermoplastauskleidung 3 eine Kunstharzbeschichtung, so ist erfindungsgemäß die Vorspannung auf das Innenrohr 5 aufzubringen, solange die Beschichtung 3 noch nicht ausgehärtet ist und sich die Kontaktfläche 17 des Distanzhalters 4 in die Beschichtung 3 eindrücken und in einer Vertiefung 6 verankern.

Gemäß Fig. 4 können die Kontaktflächen der Noppen 4 besonders gestaltet werden, um die Art der Verankerung in den jeweils verwendeten Materialien bzw. der jeweiligen Montagetechnik anzupassen.

Durch die höhere spezifische Flächenbelastung dringt der Vorsprung 9 der Noppe 4 leichter in die Oberfläche 7 der Auskleidung 3 ein. Die größere Kontaktfläche 10 der Noppe 4 dient einer Begrenzung der Eindringtiefe, da sichergestellt sein muß, daß die Auskleidung 3 nicht vom Vorsprung 9 durchdrungen und damit undicht wird.

Gegebenenfalls kann die Kontaktfläche der Noppe 4 mit einem Aufsatz 16 aus einem anderen Material, z.B. einem gezackten Stahlplättchen versehen werden, welches sich durch die beschriebene Vorspannung in die Auskleidung 3 kraftschlüssig eindrückt, ohne daß diese plastifiziert oder weich sein muß.

Der Vorsprung 9, der Aufsatz 16 oder die Kontaktfläche 17 können hinterschnitten oder mit einer anderen Profilierung oder Kontaktfläche versehen sein, um neben der Verankerung gegen seitliches Verschieben auch eine Radialverankerung beim Eindringen in die Oberfläche 7 der Auskleidung bzw. die Verbindungsschicht 7 zu bewirken oder eine Klebeverbindung zu ermöglichen.

Das erfindungsgemäße Doppelwandrohr gestattet eine kostengünstige und sichere Auskleidung von begehbaren Betonrohren für erdverlegte Kanalisationen.

Durch die kraftschlüssige Verbindung mit dem Außenrohr über den Umfang des Innenrohres ist es nicht erforderlich, daß das Innenrohr so ausgebildet ist, daß es ohne äußere Hilfe auch in gefülltem Zustand formstabil bleibt, also selbsttragend ist. Daher kann durch Verringerung der Rohrwandstärke eine bedeutende Materialersparnis erreicht werden. Außerdem ermöglicht die Dünnwandigkeit des Innenrohres ein Abfangen von Relativdehnungen gegenüber dem Außenrohr, z.B. durch Durchbiegen des Innenrohres zwischen den Distanzhaltern.

## Patentansprüche

1. Verfahren zum Auskleiden eines tragenden Außenrohres (1) mit einem auf seiner Außenfläche sowohl in Umfangsrichtung als auch in Längsrichtung jeweils mehrere voneinander beabstandete Distanzhalter (4) kraftschlüssig tragenden Innenrohr (5), wobei
das Innenrohr (5) in in Längsrichtung geteilter Form in das Außenrohr (1) eingebracht, unter Vorspannung an das Außenrohr (1) unter Erzielung eines Zwischenraums zwischen den Rohren und eines kraftschlüssigen Verbunds zwischen den Distanzhaltern (4) und dem Außenrohr (1) gepreßt und dann geschlossen wird, wobei die Vorspannung des Innenrohrs aufrechterhalten wird.

2. Verfahren nach Anspruch 1, dadurch gekennzeichnet, daß das Innenrohr (5) nicht selbsttragend ausgebildet wird.

3. Verfahren nach einem der Ansprüche 1 oder 2, dadurch gekennzeichnet, daß die Distanzhalter (4) als nicht zusammenhängende Einzelelemente ausgebildet sind.

4. Verfahren nach einem der Ansprüche 1 bis 3, dadurch gekennzeichnet, daß sich die Distanzhalter (4) in eine Auskleidung (3) des Außenrohres (1) kraftschlüssig eindrücken.

5. Verfahren nach Anspruch 4, dadurch gekennzeichnet, daß die Auskleidung (3) als Kunststoffschicht, als Mörtelschicht oder als Klebeschicht ausgebildet ist.

6. Verfahren nach einem der Ansprüche 1 bis 5, dadurch gekennzeichnet, daß die Distanzhalter (4) an ihrer Kontaktfläche (17) eine Verankerungsprofilierung, insbesondere Hinterschneidung aufweisen.

7. Verfahren nach einem der Ansprüche 1 bis 6, dadurch gekennzeichnet, daß die Distanzhalter (4) an ihrer Kontaktfläche (17) profilierte Überstände (9) aufweisen.

8. Verfahren nach einem der Ansprüche 1 bis 7, dadurch gekennzeichnet, daß die Kontaktfläche (17) der Distanzhalter (4) aus zusätzlichen Aufsätzen (16) besteht, die vorzugsweise aus einem anderen Material als die Distanzhalter (4) gefertigt sind.

9. Verfahren nach einem der Ansprüche 1 bis 8, dadurch gekennzeichnet, daß die Distanzhalter (4) einstückig an dem Innenrohr (5) angeformt sind.

10. Verfahren nach einem der Ansprüche 1 bis 9, dadurch gekennzeichnet, daß das Innenrohr (5) und die Distanzhalter (4) aus Kunststoff bestehen.

11. Verfahren nach einem der Ansprüche 1 bis 10, dadurch gekennzeichnet, daß in dem Innenrohr (5) einseitig wirkende, vom Leckspalt (8) in das Innenrohr (5) sich öffnende Überdrucksicherungen (18) eingebaut werden.

12. Verfahren nach einem der Ansprüche 1 bis 11, dadurch gekennzeichnet, daß das Innenrohr (5) in unterkühltem Zustand eingebaut und die Vorspannung durch eine verhinderte Rückdehnung des Innenrohrs (5) erzeugt wird.

13. Verfahren nach einem der Ansprüche 1 bis 12, dadurch gekennzeichnet, daß die Distanzhalter (4) vor dem Zusammenbau von Innen- und Außenrohr mit dem Innenrohr (5) oder mit dem Außenrohr (1) kraftschlüssig verbunden sind.

14. Verfahren nach einem der Ansprüche 1 bis 12, dadurch gekennzeichnet, daß die Distanzhalter (4) vor dem Zusammenbau von Innen- und Außenrohr in Form eines Distanzhalterkorbes lose in das Außenrohr (1) eingeschoben werden.

## Claims

1. A process for lining a supporting outer pipe (1) with an inner pipe (5) which comprises a plurality of spacers (4) force-fitted to its outer surface and arranged in the circumferential as well as in the longitudinal direction thereof and spaced apart from each other, wherein
the inner pipe (5) is inserted into the outer pipe (1) in divided form in the longitudinal direction, is pressed with prestress to the outer pipe (1), thereby obtaining a gap between the pipes and a force-fitted composite between the spacers (4) and the outer pipe (1), and is then closed, wherein the prestress of the inner pipe is maintained.

2. The process according to claim 1, characterized in that the inner pipe (5) is designed as a non-self-supporting pipe.

3. The process according to any one of claims 1 or 2, characterized in that the spacers (4) are individual components which are not connected with each other.

4. The process according to any one of claims 1 to 3, characterized in that the spacers (4) press into a lining (3) of the outer pipe (1) in a force-fitting manner.

5. The process according to claim 4, characterized in that the lining (3) is a synthetic material layer, a mortar layer or an adhesive layer.

6. The process according to any one of claims 1 to 5, characterized in that the spacers (4) comprise an anchoring profile, in particular an undercut, at their contact surface (17).

7. The process according to any one of claims 1 to 6, characterized in that the spacers (4) comprise profiled projections (4) at their contact surface (17).

8. The process according to any one of claims 1 to 7, characterized in that the contact surface (17) of the spacers (4) comprises additional attachments (16) which are preferably produced from another material than the spacers (4).

9. The process according to any one of claims 1 to 8, characterized in that the spacers (4) are integrally formed at the inner pipe (5).

10. The process according to any one of claims 1 to 9, characterized in that the inner pipe (5) and the spacers (4) are made of synthetic material.

11. The process according to any one of claims 1 to 10, characterized in that unilaterally acting excess pressure safety means (18) are mounted in the inner pipe (5) which open from the leakage gap (8) into the inner pipe (5).

12. The process according to any one of claims 1 to 11, characterized in that the inner pipe (5) is introduced in the undercooled state and the prestress is produced by preventing elastic recovery of the inner pipe (5).

13. The process according to any one of claims 1 to 12, characterized in that the spacers (4) are force-fitted to the inner pipe (5) or to the outer pipe (1) prior to the assembly of the inner pipe and the outer pipe.

14. The process according to any one of claims 1 to 12, characterized in that the spacers (4) are loosely inserted into the outer pipe (1) in the form of a spacer cage prior to the assembly of the inner pipe and the outer pipe.

## Revendications

1. Procédé pour le garnissage ou revêtement d'un tuyau extérieur porteur (1) avec un tuyau intérieur comprenant plusieurs éléments d'entretoise (4) fixés par adhérence et espacés sur sa face extérieure aussi bien dans la direction périphérique que dans la direction longitudinale,
le tuyau intérieur (5) étant introduit dans le tuyau extérieur (1) de façon répartie dans la direction longitudinale, comprimé en précontrainte sur le tuyau extérieur (1) obtenant ainsi un espace intermédiaire entre les tuyaux et une liaison par adhérence entre les éléments d'entretoise (4) et le tuyau extérieur (1), puis fermé de sorte que la précontrainte du tuyau intérieur est conservée.

2. Procédé selon la revendication 1, caractérisé en ce que le tuyau intérieur (5) n'est pas de conception autoportante.

3. Procédé selon l'une des revendications 1 ou 2, caractérisé en ce que les éléments d'entretoise (4) sont conçus comme des éléments individuels sans relation entre eux.

4. Procédé selon l'une des revendications 1 à 3, caractérisé en ce que les éléments d'entretoise (4) s'enfoncent par adhérence dans un revêtement ou garnissage (3) du tuyau extérieur (1).

5. Procédé selon la revendication 4, caractérisé en ce que le revêtement (3) est conçu sous forme de couches de matière synthétique, de couches de mortier ou de couches de substances adhésives.

6. Procédé selon l'une des revendications 1 à 5, caractérisé en ce que les éléments d'entretoise (4) présentent sur leur face de contact (17) un profil d'ancrage, en particulier une contre-dépouille.

7. Procédé selon l'une des revendications 1 à 6, caractérisé en ce que les éléments d'entretoise (4) présentent sur leur face de contact (17) des saillies profilées (9).

8. Procédé selon l'une des revendications 1 à 7, caractérisé en ce que la phase de contact (17) des éléments d'entretoise (4) est constituée par des appendices supplémentaires (16) qui, de préférence, sont fabriqués à partir d'un autre matériau que les éléments d'entretoise (4).

9. Procédé selon l'une des revendications 1 à 8, caractérisé en ce que les éléments d'entretoise (4) sont formés d'une seule pièce sur le tuyau intérieur (5).

10. Procédé selon l'une des revendications 1 à 9, caractérisé en ce que le tuyau intérieur (5) et les éléments d'entretoise (4) sont réalisés en matière synthétique.

11. Procédé selon l'une des revendications 1 à 10, caractérisé en ce que dans le tuyau intérieur (5) sont incorporées des sécurités de surpression (18) agissant unilatéralement, et s'ouvrant depuis l'espace de fuite (8) dans le tuyau intérieur (5).

12. Procédé selon l'une des revendications 1 à 11, caractérisé en ce que le tuyau intérieur (5) est incorporé à l'état sous-refroidi et la précontrainte est générée par une relaxation élastique empêchée du tuyau intérieur (5).

13. Procédé selon l'une des revendications 1 à 12, caractérisé en ce que les éléments d'entretoise (4) sont raccordés avant l'assemblage du tuyau intérieur et du tuyau extérieur avec le tuyau intérieur (5) ou avec le tuyau extérieur (1) par liaison par adhérence.

14. Procédé selon l'une des revendications 1 à 12, caractérisé en ce que les éléments d'entretoise (4) sont insérés avant l'assemblage du tuyau intérieur et du tuyau extérieur sous forme d'une cage d'éléments d'entretoise dans le tuyau extérieur (1).
